# FASCICULE DE BREVET EUROPEEN

(11) **EP 3 303 667 B1**
(45) Date de publication et mention de la délivrance du brevet: **05.08.2020**
(21) Numéro de dépôt: 16731241.2
(22) Date de dépôt: 06.06.2016
(51) Int. Cl.: D03D 1/00, G02B 6/02, D03D 15/00, D03D 13/00, G02B 6/04, F21V 8/00

(54) **PROCÉDÉ DE FABRICATION D'UN DISPOSITIF LUMINEUX, ET DISPOSITIF AINSI OBTENU**
VERFAHREN ZUR HERSTELLUNG EINER BELEUCHTUNGSVORRICHTUNG SOWIE RESULTIERENDE VORRICHTUNG
METHOD FOR PRODUCING A LIGHTING DEVICE AND RESULTING DEVICE

(30) Priorité: 08.06.2015 FR 1555227; 05.08.2015 FR 1557565
(43) Date de publication de la demande: 11.04.2018
(73) Titulaire: Brochier Technologies, 69100 Villeurbanne (FR)
(72) Inventeur: BARBE, Chris, 38090 Bonnefamille (FR); BROCHIER, Cédric, 69007 Lyon (FR); CHEVALIER, Delphine, 26300 Châteauneuf sur Isère (FR); MORANGE, Julien, 69140 Rillieux La Pape (FR)
(74) Mandataire: Cabinet Laurent & Charras
(86) Numéro de dépôt international: PCT/FR2016/051347
(87) Numéro de publication internationale: WO 2016/198772

(56) Documents cités:
- EP-A1- 1 221 569
- DE-A1- 10 206 613
- DE-A1-102013 002 822
- KR-A- 20090 131 127
- US-A- 3 508 589
- US-B2- 8 475 083

## Description

### DOMAINE TECHNIQUE

La présente invention concerne un procédé de fabrication de dispositifs lumineux, fiable et à grande échelle. L'invention trouve particulièrement application dans la signalisation lumineuse par exemple dans le domaine de l'automobile, du bâtiment de l'aéronautique ou encore dans le domaine médical.

### TECHNIQUES ANTERIEURES

Les dispositifs lumineux à base de fibres optiques sont bien connus de l'état de l'art. Ces fibres optiques sont généralement constituées d'un cœur et d'une gaine externe, enveloppant le cœur.

Le document US 8 215 810 décrit des dispositifs lumineux constitués d'un fourreau translucide et d'une pluralité de fibres optiques à base de poly(méthacrylate de méthyle) (PMMA) insérées dans le fourreau pour leur maintien. Les fibres optiques subissent préalablement un traitement homogène de leur gaine afin de réaliser des modifications de surface qui mettent à nu leur cœur. Ainsi, en connectant les fibres à une source d'éclairage, de la lumière se propage dans les fibres et en ressort par les modifications de surface crées dans leurs gaines. Toutefois, ces dispositifs présentent l'inconvénient de ne pas diffuser la lumière de manière homogène sur toute leur longueur. En effet, les dispositifs de longueur trop importante présentent notamment une atténuation de lumière lorsque l'on s'éloigne de la source d'éclairage du dispositif. Dans ce cas, l'intensité de lumière diffusée au sein du dispositif est donc fonction décroissante de la distance par rapport à la source d'éclairage.

Pour surmonter cet inconvénient, ce document propose une alternative consistant à placer une source d'éclairage à chacune des extrémités du dispositif lumineux. Toutefois, cette alternative présente des limites, puisque pour de grandes longueurs, le problème reste identique. De plus, outre le coût et la complexité de montage, les sources d'éclairage ne sont généralement pas exactement similaires, et plus particulièrement en termes de couleur et d'intensité. Un contraste d'intensité et/ou de couleur est alors généré et visible dans le dispositif lumineux. Ainsi, il n'existe pas de procédé de fabrication connu permettant une production fiable de ce type de dispositifs lumineux.

Tel qu'enseigné dans le document US 6 450 678, il est également connu un dispositif lumineux comportant un fourreau incluant des fibres optiques à base de PMMA ayant subi un traitement de surface pour créer des modifications de surface. Comme décrit dans ce document, ce dispositif est utilisé pour le marquage lumineux du pourtour d'un objet, par exemple un siège de véhicule automobile. Une fois monté, le dispositif peut donc présenter des zones fortement courbées, formant des angles aigus. Or, pour une même densité de modifications de surface réalisées sur une gaine d'une fibre optique, la lumière s'échappe de manière plus importante au niveau d'un angle aigu qu'au niveau d'une portion droite. Le dispositif, une fois monté, présente donc des zones de plus forte luminosité qui nuisent à la qualité du marquage recherché. Selon ce document, les fibres sont traitées dans le but d'éviter l'apparition de telles zones. Le traitement des gaines des fibres est ainsi adapté à l'incurvation que le dispositif lumineux subit lorsqu'il est monté sur son support, typiquement un article d'habitacle de véhicule. Notamment, le nombre de modifications de surface réalisées dans les gaines des fibres est diminué dans les zones des fibres présentant une forte courbure. Ainsi, le dispositif est dédié à une application bien particulière et nécessite soit un procédé de fabrication qui lui est propre, soit la réalisation d'étapes supplémentaires ou connexes qui sont contraignantes. Il s'agit donc d'un inconvénient important pour la fabrication de dispositifs lumineux à grande échelle.

Le procédé de formation de modifications de surface sur les gaines des fibres optiques est connu de l'homme du métier. Une technique connue, par exemple décrite dans le document FR 2 714 147, consiste à faire défiler des fibres optiques libres dans une cabine de sablage où est disposée une buse projetant un abrasif sous haute pression. Pour obtenir de manière fiable le résultat escompté, il convient donc de s'assurer d'un défilement maîtrisé des fibres dans la cabine, et éviter que celles-ci ne se plient lors du traitement sous l'effet de la haute pression exercée. Ceci suppose donc l'emploi d'un mécanisme de défilement qui tend les fibres de manière suffisante pour les maintenir en place lors du sablage, d'où des risques de cassure des fibres.

Le document DE 102 06 613 décrit un tissu lumineux formé de fibres optiques ayant subi un traitement par sablage similaire à celui décrit ci-avant.

Le document DE 10 2013 002822 décrit un produit dans lequel les fibres optiques sont noyées dans une matrice faite à partir d'un matériau transparent ou translucide. En outre, la diffusion latérale de la lumière est obtenue non par formation de modifications de surface sur les gaines des fibres optiques, mais par l'intégration de particules diffusantes dans les fibres.

Enfin, le document US 8 475 083 décrit un dispositif lumineux formé d'une gaine transparente enveloppant une pluralité de fibres optiques dont l'émissivité latérale est obtenue par torsion des fibres optiques.

### EXPOSE DE L'INVENTION

L'invention a pour but de proposer un procédé de fabrication de dispositifs lumineux, à base de fibres optiques enveloppées d'un fourreau, permettant une production fiable, homogène ou non homogène contrôlée, à grande échelle et pouvant être courbé à des angles aigus sans incidence sur l'intensité lumineuse.

A cet effet, l'invention a pour objet un procédé de fabrication de dispositifs lumineux comprenant les étapes de :
- a/ tissage d'un tissu, comprenant :
   * des fils de chaîne et de trame constituant l'âme du tissu ;
   * des fibres optiques tissées en trame ou en chaîne au sein dudit tissu ; lesdites fibres optiques étant formées par un cœur et une gaine enveloppant ledit cœur ;
   * des fils de liage faisant partie des fils de chaîne ou de trame, assurant le maintien des fibres optiques au sein du tissu;
- b/ traitement de surface du tissu pour former des modifications de surface à la surface desdites fibres ;
- c/ retrait total desdites fibres optiques du tissu traité ;
- d/insertion d'une partie desdites fibres rassemblées en un faisceau dans une enveloppe translucide.

On entend par « modifications de surface », toutes modifications de la géométrie et/ou des propriétés physico-chimiques de la gaine externe des fibres optiques, obtenues par un traitement mécanique, thermique voire chimique, permettant à la lumière se propageant dans la fibre de sortir de celle-ci par lesdites modifications de surface.

Dans la suite, on entend par « fil de liage », les fils de chaîne ou de trame permettant le maintien des fibres optiques au sein du textile tissé. Ces fils dépassent plus fortement sur la face « endroit » du tissu, à savoir la face directement exposée au traitement, et ils maintiennent les fibres optiques tissées en trame ou en chaîne.

Autrement dit, le Demandeur propose un procédé de fabrication de dispositifs lumineux qui utilise une étape intermédiaire de tissage permettant de positionner les fibres optiques de manière contigüe et repérable, qui se poursuit par la séparation des fibres optiques du textile support et la destruction du textile produit. Le mode de répartition des fils dans un tissu étant maîtrisé avec précision, le procédé permet notamment de fabriquer un support maintenant les fibres optiques tout en contrôlant avec précision leurs positions dans le tissu. Etant maintenues et réparties de manière précise, le traitement de leur surface est donc plus aisé et donc plus fiable. En une seule opération, il est possible de traiter plusieurs dizaines à plusieurs centaines de pièces (en fonction de leur taille). En outre, les techniques de tissage permettent de produire de manière automatisée de grandes surfaces de tissu, ce qui permet la fabrication de dispositifs lumineux à grande échelle.

Au sein du textile, les fibres optiques peuvent être avantageusement regroupées en un faisceau, voire en une pluralité de sous-faisceaux en fonction de l'application souhaitée. L'ensemble des fibres constituant un faisceau sont rassemblées à une de leur extrémité dans une bague permettant d'associer le faisceau avec une source lumineuse.

Selon un mode de réalisation particulier, le dispositif lumineux peut être composé de plusieurs sous-faisceaux de fibres optiques introduits dans le même fourreau, chacun de ces faisceaux ayant subi un traitement particulier. Lorsque chacun de ces sous-faisceaux est éclairé par une source lumineuse distincte, le guide de lumière peut alors être utilisé en tant que moyen de signalisation, fléchage ou autres.

En pratique, le tissu sert de moyen de maintien des fibres pendant leur traitement. Le tissu est donc apte à supporter les contraintes engendrées au cours du traitement des fibres. Le tissu possède ainsi des propriétés de résistance à la rupture suffisantes pour ce type de traitement. Par exemple, dans le cadre d'un sablage du tissu, la tension exercée pour maintenir les fibres tendues est répartie sur la totalité du tissu. Ainsi les fibres sont soumises à moins de contraintes mécaniques.

En pratique, le nombre de fils de liage est nettement inférieur au nombre de fils de chaîne, typiquement inférieur au centième, ce qui permet le maintien des fibres optiques sur l'âme du tissu, tout en facilitant le retrait total des fibres optiques du tissu.

Ces fils forment des zones quasi ponctuelles et permettent un maintien mécanique plus ou moins dense des fibres optiques. On entend ici par « zone quasi ponctuelle », le fait que la surface de la ou des fibres recouvertes par le fil de liage soit négligeable devant la surface de la ou des fibres exposées au traitement.

Le nombre de fils de liage peut être déterminé pour tenir compte d'un compromis entre maintien efficace des fibres optiques sur le tissu, et facilité d'extraction des fibres optiques du tissu après le traitement. Ainsi selon un mode de réalisation, un fil de liage est introduit au plus tous les 100 à 150 fils de chaine ou de trame, préférentiellement au plus tous les 120 fils de chaîne ou de trame. De cette manière, le frottement des fibres sur le tissu est négligeable lorsque l'opérateur retire les fibres optiques après que le traitement soit terminé. De plus, la surface recouverte par les fils de liage pour maintenir une fibre optique est très faible, voire négligeable, par rapport à la surface totale de la fibre. Notamment, pour un tissage constitué de fils de titre 167 dtex avec un nombre de fil de liage tous les 120 fils de chaîne ou de trame, bien que le traitement des fibres soit inopérant sur les portions des fibres optiques recouvertes par les fils de liage, on constate que cette discontinuité du traitement est invisible à l'œil humain. Pour l'œil, les fibres optiques se comportent donc comme si elles avaient été traitées sur la totalité de leur longueur.

Bien entendu, le nombre de fils de liage peut être adapté, et variable sur la largeur du tissu, si les contraintes de maintien sont elles-mêmes variables sur cette même largeur.

Selon un mode de réalisation, l'étape de traitement de surface peut être un traitement mécanique par sablage. Le traitement mécanique par sablage permet de modifier la texture de la surface de la gaine enveloppant le cœur des fibres optiques. Une partie de la lumière est ainsi diffusée au niveau des modifications de surface conférant aux fibres optiques des propriétés d'éclairage latéral. Ce type de traitement est avantageux puisqu'il permet de contrôler la distribution des modifications de surface le long du dispositif lumineux, en agissant sur la vitesse, le débit et la pression de sablage. Ainsi, il permet plus particulièrement de former un nombre de modifications de surface qui est fonction de l'intensité de la lumière au sein du dispositif et de la répartition souhaitée.

En variante, l'étape de traitement de surface peut également être réalisée au cours d'un traitement optique par rayonnement laser. Le traitement par rayonnement laser peut également permettre d'obtenir un nombre de modifications de surface fonction de l'intensité de la lumière disponible au sein du dispositif et de la longueur de fibres optiques.

Selon un mode de réalisation, les fibres optiques sont insérées dans une enveloppe translucide et fabriquée préalablement. Le caractère translucide de l'enveloppe permet de laisser passer la lumière émise par les fibres optiques traitées.

L'enveloppe peut également être transparente, et laisser donc les fibres optiques clairement apparentes. Dans ce cas, l'intensité lumineuse émise par le dispositif est d'autant plus importante, mais rend les fibres optiques visibles.

Un compromis est donc à trouver avec la composition du matériau, puisqu'à l'inverse si le matériau est trop opaque, il absorbe trop de lumière et le dispositif perd de son efficacité.

En pratique, l'enveloppe est un fourreau, en matière plastique et de composition homogène. La matière du fourreau est avantageusement inactive chimiquement par rapport à celle des gaines des fibres optiques. En d'autres termes, le fourreau et les fibres optiques sont chimiquement compatibles. Ainsi, le dispositif ne se dégrade donc pas de manière spontanée.

En pratique, le fourreau peut adopter différentes géométries, en fonction de sa destination, et notamment de l'esthétique souhaitée. Avantageusement, le fourreau présente une géométrie de son volume intérieur qui facilite l'insertion des fibres optiques. En pratique, une section cylindrique, ou de façon plus générale, une section exempte d'arêtes anguleuses est favorable avec l'insertion des fibres optiques. Le matériau constituant l'enveloppe a été développé pour permettre l'introduction des fibres optiques dans le fourreau sans utilisation de lubrifiant.

Par ailleurs, le fourreau peut également présenter des moyens de maintien en combinaison avec un support.

Par ailleurs, le matériau plastique du fourreau est suffisamment souple pour conférer des propriétés de rayon de courbure minimal intéressantes pour ce type d'application. En effet, le fourreau confine les fibres optiques en un faisceau qui résiste à la courbure de façon plus efficace que si le faisceau était nu. Le dispositif lumineux peut ainsi épouser des géométries variées et relativement accidentées des éléments destinés à le supporter, sans qu'il n'y ait de courbure trop prononcée et a fortiori de casse des fibres optiques entraînant un ou plusieurs points de lumière ou plus généralement une zone de surintensité lumineuse indésirable.

Selon une autre caractéristique de l'invention, le dispositif lumineux comprend une bague dans laquelle les extrémités des fibres optiques sont regroupées. Cette bague est destinée à être positionnée en regard de la source d'éclairage du dispositif. Les fibres sont ainsi agencées en regard de la source d'éclairage de manière à maximiser leur exposition.

Avantageusement en pratique, le nombre de modifications de surface sur la gaine des fibres optiques, par unité de longueur, est croissant sur la longueur de la fibre en se dirigeant de la première extrémité vers la deuxième extrémité du fourreau. Cette distribution des modifications de surface permet de conduire un maximum de lumière, injectée par la première extrémité du fourreau jusqu'à la seconde extrémité du fourreau tout en assurant une diffusion homogène de la lumière sur toute la longueur du dispositif.

Avantageusement en pratique, les fibres optiques polymériques sont des fibres à base de PMMA. Le PMMA est en effet un matériau de référence présentant des propriétés d'élasticité en flexion plus attractives que les fibres de verre. Dans ce cas, le dispositif peut adopter un rayon de courbure plus faible, par conséquent s'adapter à des configurations plus variées de supports l'accueillant.

En pratique, on a constaté que lors de l'introduction des fibres optiques à l'intérieur du fourreau, les fibres optiques ont tendance à se réarranger, à se mélanger de telle sorte qu'elles se retrouvent dans une configuration où leurs surfaces traitées sont réparties angulairement. En effet, de par le procédé de fabrication évoqué ci-dessus, les fibres optiques présentent toutes une surface qui n'a pas été exposée au traitement, et qui n'émet pas de lumière, et qu'on peut ainsi qualifier de zone « aveugle ». La mise en faisceau et l'introduction dans le fourreau effectue une sorte de brassage des fibres qui fait que les zones aveugles des fibres sont orientées quasi aléatoirement. Ce phénomène peut être accentué en effectuant une légère torsion du faisceau lors de son introduction dans le fourreau, à raison de quelques tours par mètre.

Ainsi, la distribution quasi aléatoire de l'orientation des zones dites aveugles fait que les nombreux phénomènes de réflexion et de transmission sur et à travers les fibres adjacentes moyennent l'intensité lumineuse émise sur la globalité de la périphérie du faisceau, et donc du fourreau. Autrement dit, la présence de zones aveugles, par définition incapables d'émettre de la lumière, n'a pas d'incidence sur l'intensité globale émise.

Autrement dit, la mise en faisceau et l'introduction dans le fourreau permet d'obtenir un brassage des fibres optiques améliorant ainsi la répartition homogène de la lumière sur la périphérie.

Un autre objectif de l'invention concerne un article textile tissé comprenant un dispositif lumineux tel que décrit ci-dessus.

Avantageusement en pratique, le dispositif lumineux peut être maintenu sur l'article tissé par un travail avec les fils de trame et de chaine constituant l'article textile tissé.

Avantageusement en pratique, le fourreau présente une zone réfléchissante apte à réfléchir la lumière émise par les fibres optiques en direction d'une zone translucide qui est apte à la diffuser. L'objectif est ici d'augmenter l'intensité lumineuse du dispositif notamment au niveau de la zone translucide dans le but d'augmenter ces capacités d'éclairage.

### DESCRIPTION SOMMAIRE DES FIGURES

L'invention sera bien comprise et d'autres caractéristiques et avantages de l'invention ressortiront clairement de la description qui en est faite ci-après, à titre indicatif et nullement limitatif, en références aux figures annexées, dans lesquelles :

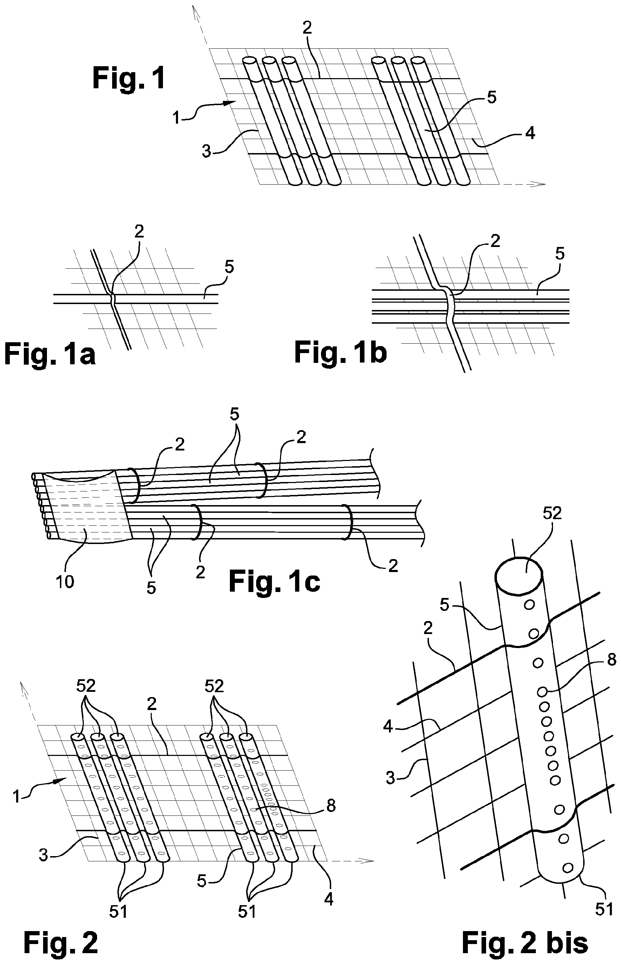

- la figure 1 est une vue simplifiée en perspective sommaire du tissu généré selon le procédé de fabrication de l'invention pendant l'étape de tissage des fibres optiques au sein d'une âme textile;
- la figure 1.a est une vue agrandie de la figure 1 où sont représentés les fils de liage ponctuels sur fibres optiques ;
- la figure 1.b est une autre vue agrandie de la figure 1 où sont représentés les fils de liage regroupant plusieurs fibres optiques ;
- la figure 1.c représente la structure textile avec ses différentes zones ;
- la figure 2 est une vue en perspective sommaire du tissu de la figure 1 pendant de l'étape de traitement des fibres optiques ;
- la figure 2bis est une vue en perspective sommaire d'une fibre optique de la figure 2 ayant subi un traitement symétrique ;

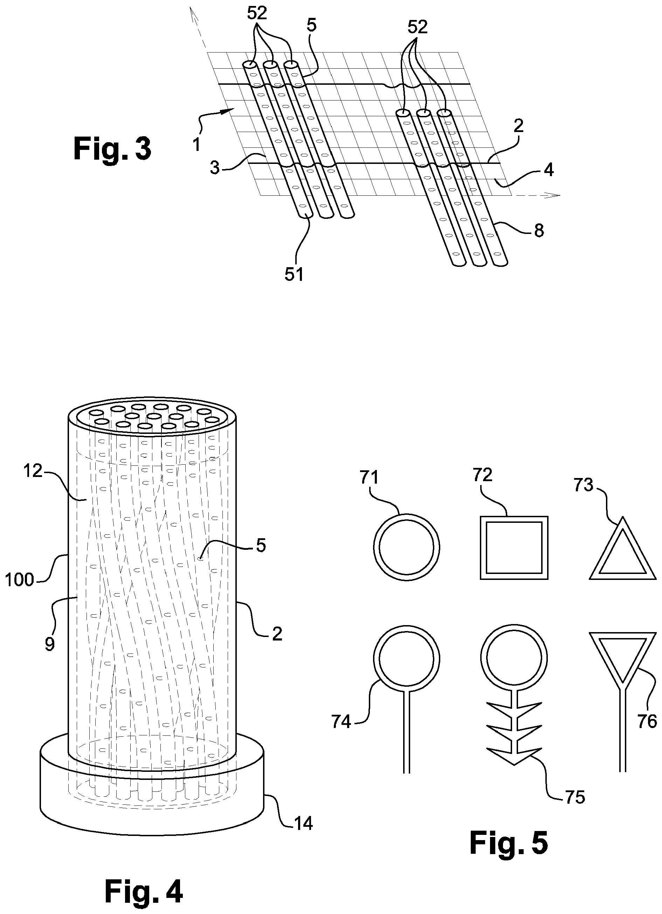

- la figure 3 est une vue en perspective sommaire du tissu de la figure 1, pendant l'étape de retrait des fibres optiques ;
- la figure 4 est une vue en perspective sommaire d'un fourreau et d'un faisceau de fibres optiques pendant l'étape d'insertion dudit faisceau dans ledit fourreau ;
- la figure 5 est un ensemble de coupes schématiques représentant différentes géométries possibles pour la section du fourreau ;

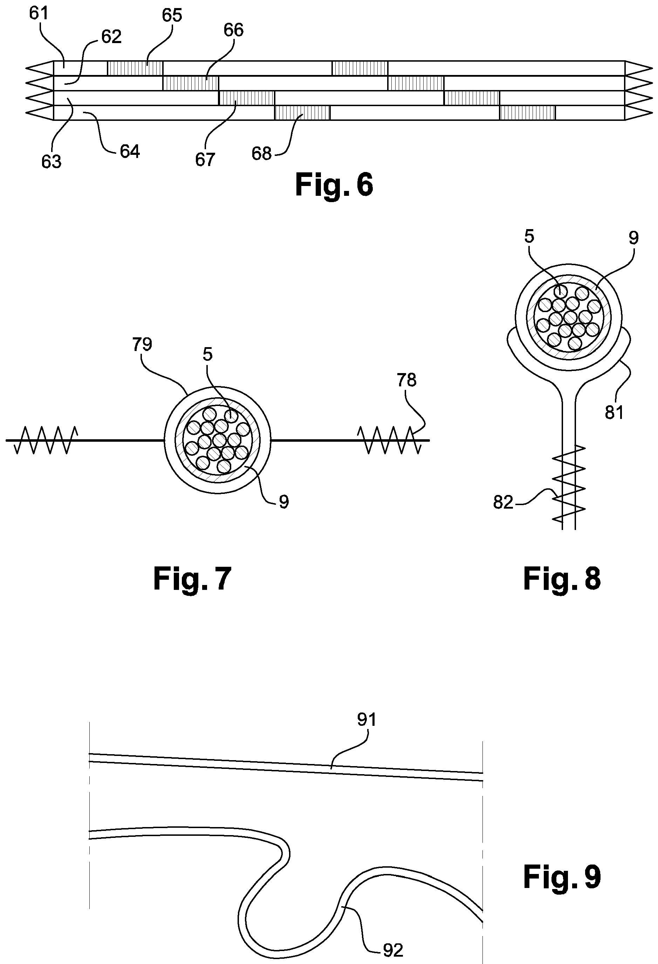

- la figure 6 est une vue de dessus représentant un mode de réalisation de l'invention permettant une dynamique lumineuse par zone ;
- la figure 7 est une coupe transversale représentant l'invention dans un article textile tissé.
- la figure 8 est une coupe transversale représentant l'invention dans une poche passepoilée d'un article textile.
- la figure 9 est une vue de dessus représentant l'invention dans deux poches présentant des géométries différentes,

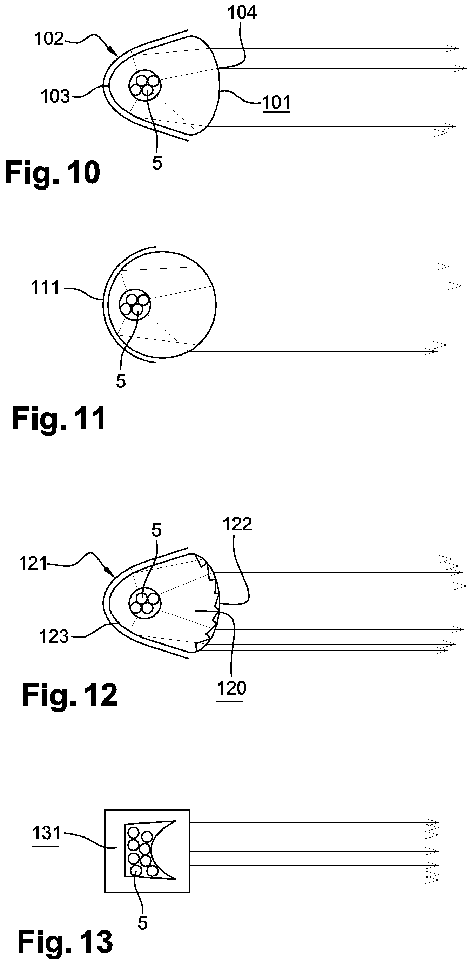

- la figure 10 est une coupe transversale représentant un mode de réalisation de l'invention dans lequel le fourreau présente des propriétés de réflecteur de la lumière ;
   la figure 11 est une coupe transversale représentant une variante de réalisation de la figure 10, dans lequel le fourreau présente une forme de miroir sphérique ;
- la figure 12 est une coupe transversale représentant une variante de réalisation de la figure 10, dans laquelle le fourreau présente une géométrie de lentille de Fresnel
- la figure 13 est une coupe transversale représentant une variante de réalisation de la figure 10 pour lequel le fourreau présente une épaisseur variable.

### MANIERE DE REALISER L'INVENTION

L'invention concerne donc un procédé de fabrication, fiable et à grande échelle, de dispositifs lumineux à base de fibres optiques qui sont enveloppées par un fourreau.

Le procédé de fabrication d'un tel dispositif **100** comprend principalement quatre étapes.

Tel que représenté sur la figure 1, la première étape consiste à tisser une âme textile **1** afin de maintenir les fibres optiques **5.** Cette âme textile **1** est réalisée par des méthodes de tissage bien connues de l'homme du métier. L'âme textile **1** est composée des fils de chaîne **4** et des fils de trame **3.** En pratique, l'âme textile **1** peut être réalisée par un métier à tisser type Jacquard pour délimiter les zones de rassemblement des fibres optiques **5.** L'âme textile **1** peut être réalisée à partir de fils d'un titre compris entre 50 et 500 décitex. Les fils utilisés peuvent être en polyester et notamment en Trevira CS. En pratique, le polyester fait partie des matériaux privilégiés pour tisser l'âme textile **1.** En effet, c'est un matériau peu onéreux, et qui est disponible en titres fins comme du 50dtex. L'âme textile n'est présente que pour servir de support aux fibres optiques **5** et permettre le tissage ; les fibres optiques **5** étant ensuite séparées, il est avantageux d'utiliser des fils fins et peu onéreux, tout en ayant la résistance mécanique suffisante pour maintenir les fibres optiques **5.**

Au cours de l'étape de tissage, des fibres optiques **5** sont tissées en trame de manière régulière, un coup sur deux, en alternance avec la trame textile. Selon un mode de réalisation, les fibres optiques **5** ont un diamètre compris entre 0,1 et 3mm, préférentiellement, voisin de 0,5 mm

Tel que représenté sur la figure 1, les fibres optiques **5** sont maintenues au sein de l'âme textile par des fils de liage **2.**

Tel que représenté sur la figure la, un fil de liage **2** peut maintenir une unique fibre optique, on parle alors de liage **2** dit « ponctuel ».

Tel que représenté sur la figure 1b, un fil de liage **2** peut maintenir plusieurs fibres optiques **5** à la fois.

En pratique, on forme un fil de liage **2** tous les 120 fils de chaîne **3** ou trame **4.** L'utilisation de ces fils de liage **2** permet de maintenir les fibres optiques **5** au sein de l'âme textile **1** dans le but de réaliser la seconde étape qui consiste au traitement des fibres optiques **5.**

Tel que représenté en figure 1c, une zone **10** spécifique sans liage, dite « flottée » peut être incorporée en bord de tissage afin de manipuler et retirer aisément les fibres optiques **5.**

Le traitement mécanique peut être un traitement par sablage qui consiste à modifier la surface des fibres optiques **5** en projetant un abrasif à grande vitesse, à l'aide d'air comprimé au travers d'une buse. L'abrasif peut avoir une forme aléatoire. Préférentiellement, les modifications de surface engendrées peuvent être assimilées à des encoches. Tel que représenté sur la figure 2, l'impact de l'abrasif sur la surface des fibres optiques **5** entraine la formation de modifications de surface **8.** Le traitement des fibres optiques **5** se fait de manière progressive. Comme représenté sur la figure 2, le nombre de modifications de surface **8** formées est donc croissant de la première extrémité **51** des fibres **5** destinées à être agencées en regard de la source d'éclairage vers la seconde extrémité **52.** Les fibres optiques **5** ainsi traitées possèdent donc des propriétés permettant l'éclairage latéral.

Selon un autre mode de réalisation, l'étape de traitement de surface est réalisée au cours d'un traitement optique par rayonnement laser. Le traitement par rayonnement laser permet également d'obtenir un nombre de modifications de surface fonction de l'intensité de la lumière disponible au sein de la source de lumière et de la longueur de fibres optiques.

Tel que représenté sur la figure 2bis, le traitement des fibres optiques **5** peut également être réalisé dans un sens comme dans l'autre notamment pour des applications spécifiques lorsque deux sources lumineuses sont utilisées à chacune des extrémités **51,52** des fibres optiques **5.** Dans ce cas, on parle de traitement symétrique ou en « double connectique » de la fibre optique **5.**

En pratique, l'âme textile **1** est apte à supporter les contraintes engendrées au cours du traitement par sablage des fibres optiques **5.**

Une fois que les fibres optiques **5** sont traitées, la troisième étape du procédé de fabrication, représentée sur la figure 3, consiste au retrait total de ces fibres **5** et à une insertion concomitante de ces fibres optiques **5** dans le fourreau **9.** La réalisation conjointe du retrait des fibres optiques **5** du tissu et de leur insertion dans le fourreau **9** permet de maintenir les fibres optiques **5** parallèles et rigides pour une meilleure maitrise de leur insertion.

En pratique, comme mentionné précédemment, un fil de liage **2** est formé environ tous les 120 fils de chaîne ou de trame **4.** Le choix d'un fil de liage tous les 120 fils de chaîne ou de trame permet également de faciliter l'étape de retrait des fibres optiques **5** de l'âme textile **1.** En effet, les frottements entre les fibres optiques **5** et les fils de liage **2** sont minimisés et le retrait des fibres **5** est alors facilité. En outre, la surface recouverte par les fils de liage **2** pour maintenir une fibre optique **5** est très faible, voire négligeable, par rapport à la surface totale de la fibre **5.** Notamment, pour un tissage constitué de fils de titre 167 dtex, bien que le traitement mécanique des fibres **5** soit inopérant sur les portions des fibres optiques **5** recouvertes par les fils de liage **2,** on constate que cette discontinuité du traitement est invisible à l'œil humain. Pour l'œil, les fibres optiques **5** se comportent donc comme si elles avaient été traitées sur la totalité de leur longueur.

Une autre alternative consiste à inverser les étapes de fabrication du dispositif lumineux **100.** Tout d'abord, on regroupe les fibres optiques **5** par sous-ensembles dans une bague **14** après leur traitement. Le regroupement des fibres optiques **5** sélectionnées pour un sous-ensemble peut se faire grâce à l'emploie d'une zone de sélection obtenue conformément aux enseignements du brevet EP 1 675 985. Préférentiellement, les fibres optiques **5** s'arrangent de manière à former un faisceau de segments parallèles au sein de la bague **14.**

Cette solution permet de différentier des ensembles de fibres optiques **5** lors des phases de traitement pour éclairage latéral et pour la connexion des fibres optiques **5** tout en permettant leur insertion sans distinction dans un même fourreau.

En effet, afin de créer un dispositif **100** lumineux comportant une dynamique lumineuse amenée par les sources d'éclairage, il est nécessaire de conserver des faisceaux de fibres optiques **5** distincts et donc de réaliser l'opération de rassemblement des fibres optiques **5** avant leur extraction du tissu.

En pratique, pour réaliser un dispositif **100** lumineux ayant par exemple une dynamique d'éclairage par balayage, on produit un faisceau de fibres **5** ayant uniquement certaines zones lumineuses. Ceci peut être réalisé par un dessin Jacquard dans lequel les zones lumineuses sont formées par des fibres optiques **5** présentes en face avant du tissu et les zones non lumineuses par des fibres optiques **5** situées en face arrière, non disponible pour le traitement de surface ; ceci peut également être réalisé par pochoir ou un moyen quelconque de créer des zones lumineuses et non lumineuses.

Chaque groupe de fibres optiques **5,** représentant une zone, est ensuite connecté à une source de lumière.

Ainsi, si toutes les sources sont éclairées à la même intensité et en même temps, le dispositif **100** lumineux est totalement homogène.

Tel que représenté sur la figure 6, le dispositif **100** lumineux peut également être composé d'une pluralité de sous-faisceaux **61,62,63,64** de fibres optiques **5.** Chacun des faisceaux **61,62,63,64** ayant subi un traitement particulier, les modifications de surface des fibres optiques **5** entre chacun des sous-faisceaux **61,62,63,64** sont donc réalisées dans des zones différentes **65,66,67,68** positionnées à des niveaux décalés. Ainsi, lorsque l'on éclaire chacun des sous-faisceaux **61,62,63,64** à la suite à l'aide de sources d'éclairage spécifiques pour chaque sous-faisceau **61,62,63,64,** on obtient un dispositif **100** lumineux permettant d'effectuer un balisage, ce qui peut être très utile notamment dans des applications de signalisation.

En outre, une variante consistant à éclairer de chaque côté du dispositif, permet de démultiplier les possibilités de zones lumineuses indépendantes.

Les fibres optiques **5** sont collées entre elles à l'intérieur de la bague **14.** La colle utilisée peut être une colle époxy, opaque, réticulable à l'air ambiant ou sous UV. Elle permet notamment au niveau de l'extrémité **51** de maintenir les fibres **5** dans la bague **14** tout en absorbant la lumière qui passe entre les fibres optiques **5.** En outre, elle permet de réduire l'effet de surintensité au niveau de l'extrémité **51** lorsque les fibres optiques **5** sont exposées à une source d'éclairage au cours de l'utilisation du dispositif **100.** Ainsi, elle augmente l'homogénéité de l'intensité de lumière du dispositif **100.**

Selon un autre mode de réalisation, les fibres optiques peuvent être serties dans la bague.

Selon un mode de réalisation, la bague **14** est avantageusement un manchon de section circulaire. Les fibres optiques **5** présentes dans la bague **14** sont destinées à être agencées en regard d'une source d'éclairage type LED, OLED, LASER ou autre source de lumière de manière à maximiser leur exposition. Le flux lumineux est ainsi principalement concentré sur le faisceau de fibres optiques **5**

Le nombre de fibres **5** par sous-ensemble peut être fixé en fonction du diamètre interne du fourreau **9** ou encore par le diamètre des fibres optiques **5** choisi. En pratique un nombre de 10 à 20 fibres **5** par fourreau **9,** typiquement 15 fibres optiques permet d'obtenir un agencement optimal des fibres optiques **5.**

En pratique, l'étape de retrait se fait manuellement par l'opérateur qui regroupe un sous-ensemble de 15 fibres optiques **5** adjacentes au sein de l'âme textile **1.** Le choix de 15 fibres optiques **5** permet d'obtenir un rayon de courbure minimal donc des propriétés de courbure d'autant plus grande. Ce choix permet également d'éviter l'effet de pliure du dispositif **100** lorsqu'il est soumis à d'importants mouvements de flexion.

La dernière étape du procédé de fabrication consiste à insérer les fibres optiques **5** dans un fourreau **9.** Tel que représenté sur la figure 4, le dispositif lumineux **100** est donc composé d'une pluralité de 15 fibres optiques **5** insérées dans un fourreau **9.** Le fourreau **9** possède une section cylindrique **12** qui facilite l'insertion des fibres optiques **5** rassemblées en un faisceau de section globale sensiblement cylindrique.

Dans la pratique, si le diamètre externe **2** du fourreau **9** est de 4 mm, alors le diamètre interne est de 2 mm. Dans ce cas, le faisceau de fibres optiques **5** possède donc un diamètre légèrement inférieur à 2 mm. Le caractère translucide du fourreau **9** permet de laisser passer la lumière émise par les fibres optiques **5** traitées. Selon un mode de réalisation, le fourreau **9** est composé à d'environ 35% de polyéthylène basse densité (PEBD), d'environ 35% de polypropylène (PP) et d'environ 20% d'élastomère ainsi que d'une faible fraction de blanchissants. Ainsi, le dispositif **100** ne se dégrade donc pas de manière spontanée. Par ailleurs, le fourreau **9** peut être translucide.

Une variante peut consister à ajouter des pigments de couleur dans le tube, pour créer un tube coloré.

De manière avantageuse, le matériau possède des propriétés physico-chimiques adaptées à l'application visé. Par exemple, le dispositif lumineux **100** présente une bonne résistance aux UV, au feu mais également aux produits chimiques, ou encore une excellente compatibilité cutanée lors d'un usage médical.

Tel que représenté sur la figure 5, le fourreau **9** peut présenter différentes géométries choisies en fonction de l'application visée, comme une géométrie cylindrique **71,** carrée **72,** triangulaire **73,** ou toute autre géométrie.

En outre, le fourreau **9** peut également présenter une géométrie spécifique permettant son maintien à un support grâce à une géométrie type passepoil **74,** sapin **75,** triangulaire **76** ou toute autre géométrie possible obtenue par extrusion.

Au niveau de la seconde extrémité **52,** le fourreau **9** peut recevoir une quantité de colle permettant d'immobiliser les fibres **5,** tout en réduisant les fuites la lumière dans le cas d'une colle opaque, et ainsi jouer le rôle de bouchon de lumière.

Le dispositif **100** peut être utilisé seul ou intégré à d'autres éléments.

Tel que représenté sur la figure 7, le dispositif **100** peut être intégré dans un article textile présentant une zone d'insertion telle qu'une poche **79** tissée.

Cette poche **79** est avantageusement tissée indépendamment du dispositif **100** et peut être réalisée de différentes manières en fonction de l'application visée.

Selon un mode de réalisation, cette poche **79** est composée uniquement de fils de trame **4** et de chaine **3,** qui sont adjacents les uns des autres respectivement, de telle sorte à recouvrir entièrement le dispositif **100.** Dans ce cas, la poche **79** permet un maintien efficace du dispositif **100** ainsi que sa protection. En outre, la poche **79** est avantageusement composée de fils **78** aptes à laisser passer la lumière émise par le dispositif **100.**

Une variante consiste en un article textile tissé muni d'une poche comprenant un nombre suffisant de fils pour assurer le juste maintien du dispositif lumineux. Dans ce cas, les fils constituant la poche recouvrent très faiblement le dispositif. La lumière émise par le dispositif est alors maximale.

Tel que représenté sur la figure 8, le dispositif **100** peut également être intégré en bordure d'un article textile. Dans ce cas, le dispositif est logé dans une poche passepoilée **81.** Un fil de couture **82** permet de rejoindre chacune des extrémités de textile formant la poche **81.**

Enfin tel que représenté sur la figure 9, le dispositif **100** peut être intégré aussi bien dans une poche de géométrie rectiligne **91** ou courbée **92** en fonction de l'application visée.

Le dispositif peut être muni d'un fourreau présentant des propriétés optiques spécifiques à l'application envisagée.

Tel que représenté sur la figure 10, le fourreau **101** peut présenter une couche **102** de revêtement appliquée sur une partie de sa surface pour former une zone réfléchissante **103** de telle sorte que la lumière émise par les fibres optiques **5** soit réfléchie en direction de la zone translucide **104** du fourreau qui n'est pas recouverte du revêtement.

De manière générale, la zone réfléchissante est de préférence orientée du côté du support, afin d'éviter que de la lumière soit inutilement absorbée par le support. Inversement, la zone translucide du fourreau par laquelle la lumière est émise est orientée en direction de l'utilisateur, pour augmenter la luminosité apparente du dispositif ou d'une zone de réflexion, si l'utilisation du guide est indirecte

La couche **102** de revêtement est avantageusement métallique et peut être réalisée par dépôt chimique en phase vapeur assisté par plasma (PECVD), dépôt chimique en phase vapeur sous pression atmosphérique (APCVD) ou encore par dépôt spray.

Selon une variante, la couche de revêtement peut être tout type de matériaux polymères possédant des propriétés de réflexion de la lumière, ou conférant des propriétés au fourreau de réflecteur de la lumière.

Le fourreau peut présenter des formes géométriques diverses permettant également d'augmenter l'intensité de lumière réfléchie

Tel que représenté sur la figure 10, le fourreau **101** présente une association de deux géométries distinctes. La zone réfléchissante **103** présente une surface type miroir parabolique permettant de réfléchir la lumière provenant des fibres **5** optiques en direction de la zone translucide **104.** Lorsque les fibres **5** optiques sont positionnées à proximité du foyer de la surface réfléchissante **103,** alors les rayons générés sont réfléchis sous la forme d'un faisceau de lumière sensiblement parallèle, en direction de la surface translucide **104.**

Tel que représenté sur la figure 11, la zone réfléchissante **111** peut avoir une forme de type miroir sphérique.

Tel que représenté sur la figure 12, la zone translucide **122** du dispositif peut présenter une forme similaire à une lentille de Fresnel ou tout autre dispositif permettant de concentrer la lumière selon une direction privilégiée.

Le fourreau **120** est muni d'une couche de revêtement **121** métallique sur la zone réfléchissante **123** qui présente une surface de forme miroir parabolique. En outre, la zone translucide **122** présente, quant à elle, une surface de la forme d'une lentille de Fresnel. Ainsi, la lumière émise provenant des fibres **5** optiques en direction de la zone réfléchissante **123** est réfléchie par la couche **121** métallique définissant le miroir parabolique. La lumière est totalement réfléchie en direction de la zone translucide **122** présentant une fonction lentille de Fresnel, et elle ressort selon une direction privilégiée en fonction de l'application désirée.

Tel que représenté sur la figure 13, le fourreau **131** peut présenter des épaisseurs différentes lui permettant ainsi de définir des zones de plus ou moins grande luminosité. En effet, dans les zones où l'épaisseur du fourreau **131** est plus forte, par exemple dans la partie centrale du fourreau illustré en figure 13, l'atténuation de la lumière émise par les fibres **5** optiques est plus grande. La luminosité est donc fonction de la distance traversée par la lumière à travers le fourreau **131,** ce qui donne un effet visuel particulier. Bien entendu, la variation de l'épaisseur peut être adaptée en fonction de l'effet visuel recherché.

Il ressort de ce qui précède que le procédé de fabrication de l'invention présente de nombreux avantages et il permet notamment la fabrication de dispositifs lumineux:
- qui présentent une intensité lumineuse homogène sur toute leur longueur, y compris dans des zones de courbure potentielle
- dont les propriétés sont reproductibles à grande échelle ;
- avec un procédé collectif permettant une production à grande échelle à coûts limités.

## Revendications

1. Procédé de fabrication d'un dispositif lumineux (100) comprenant les étapes de :
• a/ tissage d'un tissu (1) comprenant :
*des fils de chaîne (4) et de trame (3) constituant l'âme du tissu (1) ;
*des fibres optiques (5) tissées en trame ou en chaîne au sein dudit tissu (1) ; lesdites fibres optiques (5) étant formées par un cœur et une gaine enveloppant ledit cœur ;
*des fils de liage (2) formant partie des fils de chaîne (4) ou de trame (3), assurant le maintien desdites fibres optiques (5) au sein du tissu (1) ;
• b/traitement de surface du tissu (1) comportant des fibres optiques (5) pour modifier la surface desdites fibres (5), le traitement de surface incluant un traitement mécanique, thermique ou chimique pour former des modifications de surfaces sur la surface de chacune des fibres permettant à la lumière se propageant dans la fibre de sortir de celle-ci par lesdites modifications de surface ;
• c/retrait total desdites fibres optiques (5) du textile (1) traité ;
• d/insertion d'une partie desdites fibres (5) rassemblées en au moins un faisceau dans une enveloppe translucide (9).

2. Procédé selon la revendication 1, **caractérisé en ce que** l'étape de tissage introduit un fil de liage (2) au plus tous les 100 à 150 fils de chaine (4), préférentiellement au plus tous les 120 fils de chaîne (4).

3. Procédé selon l'une des revendications précédentes **caractérisé en ce qu'**il comprend une étape qui consiste à rassembler les extrémités des fibres (5) d'un faisceau dans une bague (14).

4. Procédé selon la revendication 3, **caractérisé en ce que** lesdites fibres optiques (5) sont regroupées dans une bague (14) au niveau de ladite première extrémité de ladite enveloppe (9), ladite bague (14) étant destinée à être positionnée en regard de la source d'éclairage dudit dispositif (100).

5. Procédé selon l'une des revendications précédentes **caractérisé en ce que** les fibres optiques (5) sont tissées selon un motif Jacquard définissant des sous-faisceaux (61,62,63,64) et faisant apparaître lesdites fibres optiques (5) sur des zones distinctes (65,66,67,68), chacun des sous-faisceaux (61,62,63,64) étant destiné à être connecté à des sources lumineuses indépendantes.

6. Procédé selon la revendication 5, **caractérisé en ce qu'**il comprend une étape qui consiste à rassembler les extrémités des fibres (5) de chacun des sous-faisceaux (61,62,63,64) dans différentes bagues distinctes; lesdits sous-faisceaux (61,62,63,64) étant ensuite insérés dans ladite enveloppe (9).

7. Procédé selon l'une des revendications précédentes, **caractérisé en ce que** ladite enveloppe est un fourreau (9).

8. Procédé selon la revendication 7, **caractérisé en ce que** ledit fourreau (9) est un matériau polymère homogène.

9. Procédé selon la revendication 7, **caractérisé en ce que** ledit fourreau (9) présente des moyens de maintien à un support.

10. Procédé selon l'une quelconque des revendications 7 à 9, **caractérisé en ce que** ledit fourreau (101,120,131) présente une zone réfléchissante (103,123) apte à réfléchir la lumière émise par les fibres optiques (5) en direction d'une zone translucide (104, 122) qui est apte à la diffuser.

11. Procédé selon l'une des revendications précédentes **caractérisé en ce que** ledit nombre de modifications (8), par unité de longueur, présent sur une fibre (5) est croissant sur la longueur de la fibre (5) en se dirigeant de la première extrémité vers la deuxième extrémité de ladite enveloppe.

12. Procédé selon l'une des revendications précédentes, **caractérisé en ce que** lesdites fibres optiques (5) sont des fibres polymériques en polyméthacrylate de méthyle.

## Patentansprüche

1. Verfahren zur Herstellung einer Beleuchtungsvorrichtung, umfassend die folgenden Schritte:
a/ Weben eines Gewebes mit:
*Kett- (4) und Schussfäden (3), die den Kern des Gewebes (1) bilden;
*Schuss- oder kettengewebten optischen Fasern (5) innerhalb des Gewebes (1), wobei die optischen Fasern (5) durch einen Kern und eine den Kern umgebende Hülle gebildet werden,
*Verbindungsfäden (2), die einen Teil der Kett- (4) oder Schussfäden (3) bilden, und dafür sorgen, dass diese optischen Fasern (5) innerhalb des Gewebes (1) gehalten werden;
b/ Behandlung der Oberfläche des Gewebes (1), das optische Fasern (5) enthält, zur Modifikation der Oberfläche dieser Fasern (5), dabei umfasst die Oberflächenmodifikation eine mechanische, thermische oder chemische Behandlung, um Oberflächenmodifikationen auf der Oberfläche jeder einzelnen Fasern zu erreichen, durch die das Licht, das sich in der Faser ausbreitet, diese durch die genannten Oberflächenmodifikationen verlassen kann;
c/ vollständige Entfernung dieser optischen Fasern (5) aus dem behandelten Gewebe (1);
d/ Einlegen eines Teils dieser zu mindestens einem Bündel zusammengefassten Fasern (5) in eine durchscheinende Hülle (9).

2. Verfahren nach Anspruch 1, **dadurch gekennzeichnet, dass** während des Schritts des Webens, höchstens alle 100 bis 150 Kettfäden (4), besser noch höchstens alle 120 Kettfäden (4) ein Verbindungsfaden (2) eingelegt wird.

3. Verfahren nach einem der vorangehenden Ansprüche **dadurch gekennzeichnet, dass** es einen Schritt umfasst, der darin besteht, die Endabschnitte der Fasern (5) eines Bündels in einem Ring (14) zusammenzufassen.

4. Verfahren nach Anspruch 1, **dadurch gekennzeichnet, dass** während des Schritts des Webens, höchstens alle 100 bis 150 Kettfäden (4), besser noch höchstens alle 120 Kettfäden (4) ein Verbindungsfaden (2) eingelegt wird.

5. Verfahren nach einem der vorangehenden Ansprüche **dadurch gekennzeichnet, dass** die optischen Fasern (5) nach einem Jacquard- Motiv gewebt sind, das Unterbündel definiert und diese optischen Fasern (5) in verschiedenen Zonen (65, 66, 67, 68) hervortreten lässt, jedes dieser Unterbündel (61, 62, 63, 64) ist dazu bestimmt, mit unabhängigen Leuchtquellen verbunden zu werden.

6. Verfahren nach Anspruch 5, **dadurch gekennzeichnet, dass** es einen Schritt umfasst, der darin besteht, die Endabschnitte der Fasern (5) jedes der Unterbündel (61, 62, 63, 64) in verschiedenen, voneinander getrennten Ringen zusammenzufassen, diese Unterbündel (61, 62, 63, 64) werden dann in die genannte Hülle (9) eingefügt.

7. Verfahren nach einem der vorangehenden Ansprüche **dadurch gekennzeichnet, dass** es sich bei der Hülle um einen Mantel (9) handelt.

8. Verfahren nach Anspruch 7, **dadurch gekennzeichnet, dass** dieser Mantel (9) aus einem homogenen Polymer besteht.

9. Verfahren nach Anspruch 7, **dadurch gekennzeichnet, dass** dieser Mantel (9) Vorrichtungen zur Befestigung an einem Halter enthält.

10. Verfahren nach einem der vorangehenden Ansprüche 7 bis 9, **dadurch gekennzeichnet, dass** dieser Mantel (101, 120, 131) eine reflektierende Zone (103, 123) aufweist, die das von den optischen Fasern (5) ausgestrahlte Licht in Richtung einer durchscheinenden Zone (104, 122) sendet, die es verbreiten kann.

11. Verfahren nach einem der vorangehenden Ansprüche, **dadurch gekennzeichnet, dass** die Zahl der Modifikationen (8), pro Längeneinheit, die auf einer Faser (5) vorhanden ist, über die Länge der Fasern (5) ansteigt, indem sie vom ersten Endabschnitt zum zweiten Endabschnitt dieser Hülle gelangt.

12. Verfahren nach einem der vorangehenden Ansprüche, **dadurch gekennzeichnet, dass** es sich bei diesen optischen Fasern (5) um Polymerfasern aus Polymethylmethacrylat handelt.

## Claims

1. Method of manufacturing a lighting device (100) comprising the steps of:
• a/ weaving a fabric (1), comprising:
* warp (4) and weft (3) yarns that form the core of the fabric (1);
* weft- or warp-woven optical fibres (5) within said fabric (1); said optical fibres (5) being formed by a core and a sheath surrounding said core;
* binding yarns (2) forming part of the warp (4) or weft (3) yarns, maintaining said optical fibres (5) inside the fabric (1);
• b/ surface treatment of the fabric (1) comprising optical fibres (5) to modify the surface of said fibres (5), said surface treatment including mechanical, thermal or chemical treatment for forming surface modifications on the surface of each of the fibres allowing light propagating within the fibre to escape therefrom by said surface modifications;
• c/ removing the optical fibres (5) fully from the treated fabric (1);
• d/ inserting a portion of said fibres (5) grouped together in at least one bundle into a translucent casing (9).

2. Method according to claim 1, wherein the step of weaving introduces a binding yarn (2) no more than every 100 to 150 warp yarns (4), preferably no more than every 120 warp yarns (4).

3. Method according to one of the preceding claims, wherein it comprises a step which consists of gathering the ends of the fibres (5) of a bundle into a ring (14).

4. Method according to claim 3, wherein said optical fibres (5) are gathered into a ring (14) at said first end of said casing (9), said ring (14) being intended to be positioned facing the light source of said device (100).

5. Method according to one of the preceding claims, wherein the optical fibres (5) are woven according to a Jacquard design defining the sub-bundles (61,62,63,64) and resulting in said optical fibres (5) appearing on distinct areas (65,66,67,68), each of the sub-assemblies (61,62,63,64) being intended to be connected to independent light sources.

6. Method according to claim 5, wherein it comprises a step which consists of gathering the ends of the fibres (5) of each of the sub-bundles (61,62,63,64) into separate rings; said sub-bundles (61,62,63,64) being then inserted into said casing (9).

7. Method according to one of the preceding claims, wherein said surround is a casing (9).

8. Method according to claim 7, wherein said casing (9) is a homogeneous polymeric material.

9. Method according to claim 7, wherein said casing (9) has means of being held to a support.

10. Method according to any one of claims 7 to 9, wherein said casing (101, 120, 131) has a reflective area (103, 123) capable of reflecting the light emitted by the optical fibres (5) in the direction of a translucent area (104, 122), which is able to diffuse it.

11. Method according to one of the preceding claims, wherein said number of modifications (8) per unit of length present on a fibre (5) increases over the length of the fibre (5) going from the first end towards the second end of said casing.

12. Method according to one of the preceding claims, wherein said optical fibres (5) are polymer fibres made from methyl polymethacrylate.
